# EUROPÄISCHE PATENTANMELDUNG

(11) **EP 1 092 353 A2**
(43) Veröffentlichungstag der Anmeldung: **18.04.2001**
(21) Anmeldenummer: 99125337.8
(22) Anmeldetag: 20.12.1999
(51) Int. Cl.: A23N 12/08

(54) **Verfahren zur Trocknung von Obst- oder Gemüsefrüchten sowie Anlage zur Durchführung des Verfahrens und Bandtrockner**

(30) Priorität: 05.10.1999 EP 99119151
(71) Anmelder: Santrade Ltd., CH-6002 Luzern (CH); BATTELLE INGENIEURTECHNIK GmbH, D-65760 Eschborn (DE)
(72) Erfinder: Kleinhans, Matthias, 71336 Waiblingen (DE); Schermutzki, Konrad, 71686 Remseck (DE); Gierke, Stefan, 70736 Fellbach (DE); Jung, Bernd, 66957 Ruppertsweiler (DE); Kriszio, Horst, 63075 Offenbach (DE); Mayer, Horst-Martin, 74924 Neckarbischofsheim (DE); Kneer, Aron, 76131 Karlsruhe (DE)
(74) Vertreter: Wilhelm & Dauster Patentanwälte European Patent Attorneys

(57) **Zusammenfassung**

Verfahren zur Trocknung von Obst- oder Gemüsefrüchten, Anlage zur Durchführung des Verfahrens und Bandlufttrockner (9) hierfür.

Eine Anlage zur Trocknung von Obst- oder Gemüsefrüchten mit einer Vortrocknungsstation (2), einer Mikrowellenbehandlungsstation (3) und einer Nachbehandlungsstation (4) ist bekannt.

Erfindungsgemäß werden die Früchte in einer vorzugsweise durchgehend gleichmäßig hohen, unverdichteten Schicht auf das perforierte Band (10) des Bandlufttrockners (12) verteilt und in einer oder mehreren möglichen Trocknungsstufen derart von unten her mit temperierter Luftströmung beaufschlagt, daß die Früchte gleichmäßig in schwebendem oder nahezu schwebendem Zustand gehalten und dabei auf eine für die Aufpuffung in einer Mikrowellenkammer (15) geeignete Restfeuchte vorgetrocknet werden.

Einsatz zum Herstellen von Instant-Fruchtprodukten, insbesondere Beerenprodukten.

## Beschreibung

Die Erfindung betrifft ein Verfahren zur Trocknung von Obst-oder Gemüsefrüchten, wobei die Früchte zunächst in wenigstens einem Bandlufttrockner vorgetrocknet, anschließend in einer Mikrowellenkammer aufgepufft und schließlich nachgetrocknet werden, sowie eine Anlage zur Durchführung des Verfahrens und einen Bandlufttrockner zur Vortrocknung einer Früchteschicht innerhalb des Verfahrens.

Aus einem Prospekt "Vacuum Belt Drying", Franco Ferrari, der Firma MEPRO-TEC, Bachenbülach, Schweiz, ist ein Verfahren und eine Anlage zur Trocknung von geschnittenen oder ganzen Obst-oder Gemüsefrüchten bekannt, um Instantprodukte zu erzeugen. Dabei wird in einer Bandlufttrocknungsstufe eine gewisse Vortrocknung der Früchte verbunden mit einer definierten Schrumpfung erreicht. Anschließend wird in einer evakuierten Mikrowellenkammer ein Aufpuffen der Früchte bewirkt. Zum Schluß erfolgt eine Nachtrocknung auf eine definierte Restfeuchte in einer Vakuumbandtrocknungsstufe, durch die eine Nachbehandlng und Strukturstabilisierung erzielt wird.

Aufgabe der Erfindung ist es, ein Verfahren, eine Anlage und einen Bandlufttrockner der eingangs genannten Art zu schaffen, mittels derer eine schonende und aromasichernde Behandlung der Früchte erzielbar ist.

Diese Aufgabe wird für das Verfahren dadurch gelöst, daß die Früchte wenigstens in der ersten von einer oder mehreren möglichen Trocknungsstufen derart von unten her mit temperierter Luftströmung beaufschlagt werden, daß die Früchte gleichmäßig in schwebendem oder nahezu schwebendem Zustand gehalten und dabei auf eine für die Weiterbehandlung in der Mikrowellenkammer geeignete Restfeuchte vorgetrocknet werden. Somit wird eine äußerst schonende und gleichmäßige Behandlung aller Früchte ermöglicht und gleichzeitig die Bildung einer trockeneren, verhornten Oberfläche, die jede einzelne Frucht umgibt und die Früchte somit auf hervorragende Weise für die anschließende Aufpuffung in der Mikrowellenkammer vorbereitet. Diese Oberflächenverhornung unterstützt das Aufpuffen der Früchte, indem sie das sofortige Entweichen des bei der Mikrowellenbehandlung freigesetzten Dampfes verhindert. Mit Hilfe der Aufpuffung gelingt die Erzeugung eines äußerst aromatischen Endprodukts mit Instant-Eigenschaften.

Die erfindungsgemäße Lösung eignet sich insbesondere für die Trocknung von Beeren, bevorzugt Erd- oder Himbeeren. In gleicher Weise ist sie jedoch auch für andere geschnittene oder ganze Obst- oder Gemüsefrüchte (insbesondere Mais oder Erbsen) einsetzbar. Unter Früchten im Sinne der Erfindung sind daher sowohl ganze als auch geschnittene Früchte, d.h. Fruchtstücke, zu verstehen.

In Ausgestaltung der Erfindung werden die Früchte in einer durchgehend gleichmäßig hohen, unverdichteten Schicht auf das perforierte Band eines Bandlufttrockners vor der ersten Trocknungsstufe verteilt. Hierdurch wird die gleichmäßige Trocknung aller Früchte gefördert.

In weiterer Ausgestaltung der Erfindung werden die Früchte in wenigstens zwei Trocknungsstufen vorgetrocknet, wobei sie zwischen den Trocknungsstufen gewendet werden, wodurch eine allseitige gleichmäßige Trocknung gefördert wird.

In weiterer Ausgestaltung der Erfindung werden die Früchte auf eine Restfeuchte zwischen 25 % und 35 % vorgetrocknet. Diese Ausgestaltung eignet sich nicht nur für die Vortrocknung mittels wenigstens eines Bandlufttrockners, sondern führt generell auch bei anderen Vortrocknungseinrichtungen, die einer Aufpuffung in einer Mikrowellenkammer vorgeschaltet sind, zu guten Aufpuffungsergebnissen.

In weiterer Ausgestaltung der Erfindung werden die Früchte für die Nachtrocknung aus der evakuierten Mikrowellenkammer entnommen und auf eine für eine Lagerung erforderliche Restfeuchte nachbehandelt. Dadurch ist eine besonders gute Stabilisierung der Struktur der Früchte erzielbar, so daß das volle Aroma der getrockneten Früchte erhalten werden kann. Die Nachbehandlung erfolgt dabei nicht im Vakuum, sondern bei Umgebungsdruck, d.h. etwa Atmosphärendruck.

In weiterer Ausgestaltung der Erfindung werden die Früchte vor dem Aufgeben auf das perforierte Band mit einem Trennmittelüberzug versehen. Alternativ oder kumulativ wird auf das perforierte Band der ersten Trocknungsstufe ein Trennmittel aufgebracht. In beiden Fällen ist beabsichtgt, das Haftenbleiben der Früchte auf dem perforierten Band oder das Aneinanderhaften bestimmter Früchte zu verhindern.

Für die Anlage wird die erfindungsgemäße Aufgabe dadurch gelöst, daß für jede Trocknungsstufe der Früchtetrocknung jeweils ein Bandlufttrockner mit einem umlaufenden, perforierten Band vorgesehen ist, das zumindest in der ersten Trocknungsstufe von unten angeströmt ist, und daß zur Aufpuffung eine evakuierte Mikrowellenkammer vorgesehen ist, an die eine Nachtrocknungsvorrichtung anschließt. Im Gegensatz zum Stand der Technik erfolgt die Nachtrocknung bei der erfindungsgemäßen Lösung nicht im Vakuum. Vielmehr werden die Früchte nach dem Aufpuffen aus der evakuierten Mikrowellenkammer herausgenommen. Als Nachtrocknungsvorichtung kann vorzugsweise ebenfalls ein Bandlufttrockner vorgesehen sein.

In Ausgestaltung der Anlage sind die Bandlufttrockner, die Mikrowellenkammer und die Nachtrocknungsvorrichtung durch Fördermittel und elektronische Steuer- und/oder Regeleinheiten zu einer kontinuierlich arbeitenden, automatisierten Gesamteinheit miteinander gekoppelt. Dadurch wird eine vollautomatisierte, zentral regelbare Anlage zur Erzeugung der Instantprodukte ermöglicht.

In weiterer Ausgestaltung der Erfindung ist in jedem Bandlufttrockner wenigstens eine Trocknungskammer vorgesehen, in der die Luftströmung quer zur Bandlaufrichtung im Kreislauf mittels einer Ventilatoranordnung und Strömungsleitmitteln derart geführt ist, daß das perforierte Band rechtwinklig von unten her über die gesamte Breite der Früchteschicht mit gleichmäßiger Strömungsgeschwindigkeit anströmbar ist. Damit wird eine besonders schonende und gleichmäßige Vortrocknung der Früchte erzielt, die Clusterbildungen zumindest weitgehend vermeidet. Die gleichmäßige Anströmung der Früchteschicht trägt auch dazu bei, daß ein maximaler Anteil der einzelnen Früchte die für die anschließende Weiterbehandlung in der Mikrowellenkammer geeignete Restfeuchte besitzt.

In weiterer Ausgestaltung der Erfindung ist eine Wärmetauscheranordnung zur Temperierung der Luftströmung in der Trocknungskammer integriert, wodurch der Strömungsweg kurz gehalten und damit auch der zur Überwindung des Strömungswiderstands erforderliche Leistungsbedarf klein gehalten wird. An die Wärmetauscheranordnung ist eine Steuer- oder Regeleinheit angeschlossen, die den Trocknungsstrom vorzugsweise in Abhängigkeit von der Strömungsgeschwindigkeit, einer Restfeuchtemessung der Früchte am Ausgang des Bandlufttrockners und gegebenenfalls weiteren Parametern steuert oder regelt. Gemäß einer weiteren Ausgestaltung der Erfindung ist die Wärmetauscheranordnung außerhalb der Trocknungskammer positioniert und über Luftkanalanschlüsse mit der Trocknungskammer verbunden.

In weiterer Ausgestaltung der Erfindung ist zwischen benachbarten Bandlufttrocknern wenigstens ein Zwischenförderband derart relativ zu dem perforierten Band des in Förderrichtung vorderen Bandlufttrockners angeordnet, daß die Fruchtschicht von dem Zwischenförderband in gewendetem Zustand weitergefördert wird. In alternativer Ausgestaltung sind benachbarte Bandlufttrockner einander derart zugeordnet, daß ein Bandauslauf des vorderen Bandlufttrockners oberhalb eines Bandeinlaufes des nachfolgenden Bandlufttrockners positioniert ist. Bei beiden Ausgestaltungen wird ein Wenden der Früchte erzielt, wodurch gewährleistet ist, daß jede Frucht in wenigstens einer Trocknungsstufe von gegenüberliegenden Seiten jeweils wenigstens einmal direkt von der Trocknungsluft angeströmt wird. Dadurch ist eine besonders gleichmäßige Vortrocknung erzielbar, die eine gute Vereinzelung der Früchte und damit gute Voraussetzungen für ein anschließendes Aufpuffen in der Mikrowellenkammer ermöglicht.

Durch die getrennte Anordnung der Trocknungsstufen kann eine Schrumpfung der Schichthöhe in der ersten Trocknungsstufe durch geeignete Wahl der Bandgeschwindigkeit für die zweite Trocknungsstufe kompensiert werden. Außerdem kann auch eine entsprechend andere Schichthöhe erzielt werden.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt schematisch in einer Seitenansicht eine Ausführungsform einer erfindungsgemäßen Anlage zur Durchführung eines erfindungsgemäßen Trocknungsverfahrens,
- Fig. 2: in schematischer Darstellung eine zweistufige Vortrocknung für die Anlage nach Fig. 1 ähnlich der Vortrocknung nach Fig. 1 und
- Fig. 3: in einem Querschnitt in vergrößerter Darstellung einen Bandlufttrockner für eine Trocknungsstufe des Vortrocknungsabschnittes nach den Fig. 1 und 2.

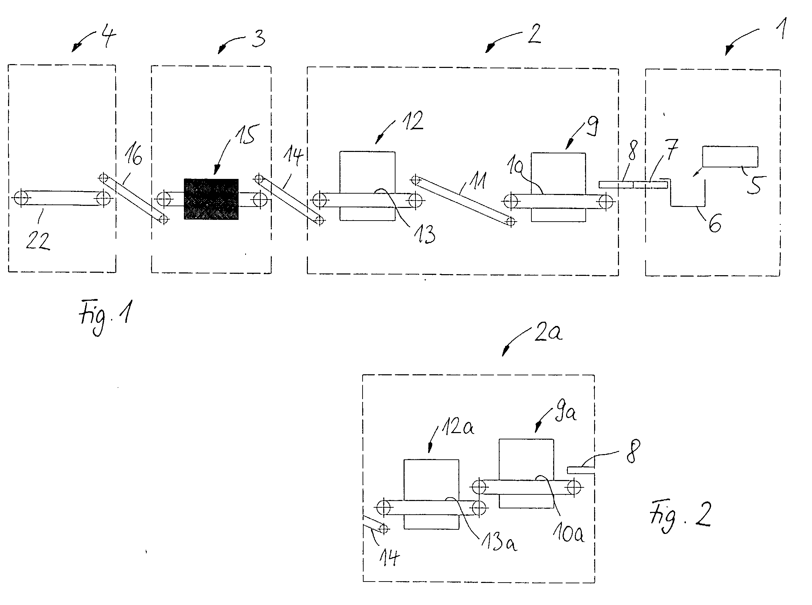

Eine Anlage zum Trocknen von geschnittenen oder ganzen Obst-oder Gemüsefrüchten gemäß Fig. 1 weist eine Produktvorbereitungsstation 1 auf, an die eine Vortrocknungsstation 2 anschließt. Auf die Vortrocknungsstation 2 folgt eine Mikrowellenstation 3. An diese schließt eine Nachbehandlungsstation 4 an. Durch die Trocknungsanlage ist es möglich, geschnittene oder ganze Obst- oder Gemüsefrüchte, vorzugsweise jedoch Erd-oder Himbeeren, aus dem frischen Fruchtzustand in ein Instantprodukt mit einer geringen, eine Lagerung ermöglichende Restfeuchte zu überführen und dabei das Geschmacksaroma der Früchte weitgehend zu erhalten.

In der Produktvorbereitungsstation 1 ist eine Schneidvorrichtung 5 vorgesehen, die zum Einsatz kommt, wenn geschnittene Früchte zu Instantprodukten verarbeitet werden sollen. Insbesondere Erdbeeren werden aufgrund ihrer Größe vorzugsweise in geschnittener Form der Vortrocknungsstation 2 zugeführt. Innerhalb der Produktvorbereitungsstation 1 werden die Früchte, gegebenenfalls nach vorherigem Schneiden mittels der Schneidvorrichtung 5 in Fruchtstücke, einem Wasserbad 6 mit anschließender Wascheinrichtung 7 zugeführt, wodurch ein Waschen der Früchte erzielt wird. An die Waschvorrichtung 7 schließt eine Trennmittelauftragvorrichtung 8 an, mittels der Trennmittel auf die Früchte aufgebracht wird. Dadurch wird verhindert, daß die Früchte aneinander und/oder an Transport-oder Förderbändern haften bleiben. Aus dem Wasserbad 6 werden die Früchte im Bereich der Waschvorrichtung 7 und der Trennmittelauftragvorrichtung 8 kontinuierlich zu einem umlaufenden, perforierten Stahlband 10 eines Bandlufttrockners 9 einer ersten Trocknungsstufe der Vortrocknungsstation 2 zugeführt. Die Trennmittelauftragsvorrichtung kann eine Sprüheinheit aufweisen, mittels der das Trennmittel auf die Früchte in pulvriger oder flüssiger Form aufgebracht wird. Die Zuführeinrichtung ist derart gestaltet, daß ein gleichmäßiges Aufbringen der Früchte über die gesamte Bandbreite des perforierten Stahlbandes 10 erfolgt.

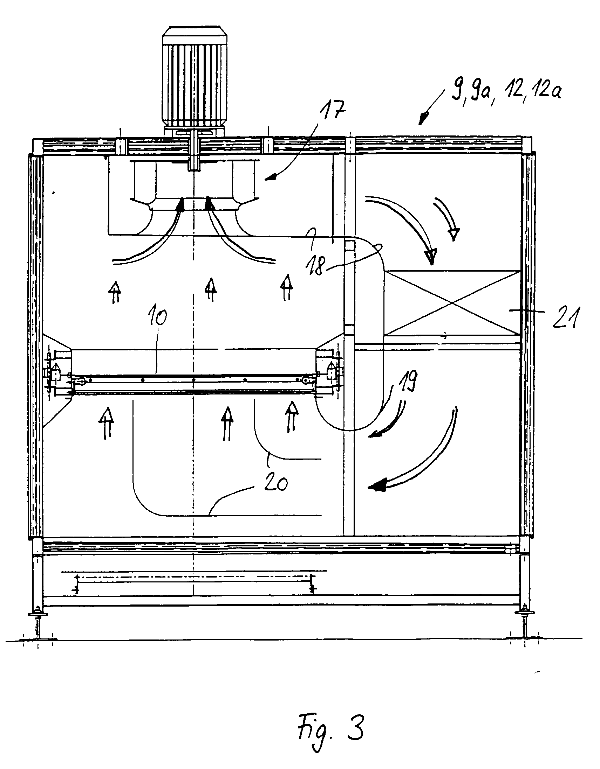

Vor dem Einlaufen der Früchte in die Trocknungskammer des Bandlufttrockners 9 der ersten Trocknungsstufe sind Mittel zum gleichmäßigen und unverdichteten Verteilen der Früchte über die gesamte Bandbreite vorgesehen. Auch in weiteren Trocknungsstufen desselben Bandlufttrockners oder von nachgeschalteten Bandlufttrocknern können entsprechende Verteilmittel vorgesehen sein. Die Verteilmittel können mechanisch gestaltet sein oder auch pneumatisch durch Blasvorgänge wirken. Vorzugsweise werden die Früchte auf das perforierte Stahlband 10 in einer ein- oder mehrlagigen Früchteschicht aufgebracht, um besonders gute Vortrocknungsergebnisse erzielen zu können. Nach dem Durchlaufen der ersten Trocknungsstufe, d.h. dem Durchlaufen des ersten Bandlufttrockners 9, fallen die Früchte der Fruchtschicht im Bereich des Auslaufes des perforierten Stahlbandes 10 auf einen Einlaufbereich eines linear ansteigenden Zwischenförderbandes 11. Durch das Herabstürzen auf das Zwischenförderband 11 wird ein Wenden der Früchte erzielt. Falls relativ empfindliche Früchte zu trocknen sind, beispielsweise Himbeeren, so wird der freie Fall zwischen Auslauf des perforierten Stahlbandes 10 und Einlaufbereich des Zwischenförderbandes 11 durch ein Prallblech oder eine ähnliche Dämpfungseinrichtung abgeschwächt. Ein Auslaufbereich des Zwischenförderbandes 11 befindet sich oberhalb eines Einlaufbereiches eines perforierten Stahlbandes 13 eines zweiten Bandlufttrockners 12, der die zweite Trocknungsstufe der Vortrocknungsstation 2 darstellt und vom Aufbau her dem Bandlufttrockner 9 entspricht. Die vom Aufbau her identischen Bandlufttrockner 9, 12 werden nachfolgend anhand der Fig. 3 beschrieben.

Durch den Einsatz des Zwischenförderbandes 11 wird ein wenigstens einmaliges Wenden der Früchte bzw. der Fruchtschicht erzielt.

Bei einer alternativen Ausführungsform der Erfindung gemäß Fig. 2 ist ein ähnliches Wenden der Früchte zwischen den beiden Trocknungsstufen einer Vortrocknungsstation 2a vorgesehen. Hierzu ist ein perforiertes Stahlband 10a eines ersten Bandlufttrockners 9a derart in der Höhe versetzt zu einem perforierten Stahlband 13a eines zweiten Bandlufttrockners 12a angeordnet, daß sich ein Auslaufbereich des ersten Stahlbandes 10a vertikal oberhalb eines Einlaufbereiches des Stahlbandes 13a befindet. Dadurch wird die Baulänge der Vortrocknungsstation 2a gegenüber der alternativen nach Fig. 1 verkürzt. Auch die Verweildauer im Nichttrocknungsbereich wird reduziert.

Mit Hilfe einer Fördereinrichtung 14 werden die auf eine für die Weiterbehandlung in der Mikrowellenkammer 15 geeignete Restfeuchte zwischen 25% und 35% vorgetrockneten Früchte der evakuierten Mikrowellenkammer 15 zugeführt, in der die Früchte aufgepufft werden. Aufbau und Funktion der Mikrowellenstation 3 und der evakuierten Mikrowellenkammer 15 sind ausführlich in der DE 196 43 989 A1 beschrieben, so daß für eine nähere Erläuterung der Mikrowellenstation 3, d.h. der Mikrowellenbehandlung innerhalb der evakuierten Mikrowellenkammer, auf diese Druckschrift verwiesen wird. Dabei muß berücksichtgt werden, daß bei dieser Druckschrift lediglich die eigentliche Mikrowellenbehandlung innerhalb der evakuierten Mikrowellenkammer der Mikrowellenstation 3 nach Fig. 1 entspricht. Entsprechende Vortrocknungen und Nachbehandlungen der in dieser Druckschrift beschriebenen Vorrichtung entsprechen nicht der erfindungsgemäßen Lösung.

Ein Bandlufttrockner, der bei den Vortrocknungsstationen 2 und 2a in jeweils beiden Trocknungsstufen eingesetzt wird, ist gemäß Fig. 3 in sehr kompakter Bauweise aufgebaut. Ein kastenförmiges Gehäuse umgrenzt eine Trocknungskammer, die über etwa 2/3 ihrer Breite mit dem durchlaufenden Obertrum des perforierten Stahlbandes 10 versehen ist. Da die Stahlbänder 10a, 13, 13a dem Stahlband 10 entsprechen, wird nachfolgend lediglich das Bezugszeichen 10 für das perforierte Stahlband verwendet. Das Obertrum des Stahlbandes 10 verläuft horizontal in Förderrichtung durch die Trocknungskammer hindurch. Das perforierte Stahlband 10 wird von unten her gleichmäßig mit temperierter Luft angeströmt (siehe Doppelpfeile). Die temperierte Luftströmung wird durch Strömungsleitmittel 20 im Bereich der Trocknungskammer unterhalb des Obertrums des Stahlbandes 10 derart geführt und umgelenkt, daß eine rechtwinklige und über die gesamte Breite des Stahlbandes 10 gleichmäßige Anströmung mit gleicher Strömungsgeschwindigkeit erzielt wird. Dadurch ist es möglich, eine äußerst gleichmäßige Trocknung der Früchte auf dem perforierten Stahlband 10 zu erzielen. Die Strömungsgeschwindigkeit der temperierten Luftströmung ist je nach Fruchtkonsistenz derart einstellbar, daß die Früchte im nahezu schwebenden Zustand auf dem Stahlband gehalten sind. Die temperierte Luftströmung wird im Kreislauf von der Fruchtschicht aus nach oben und anschließend quer zur Bandlaufrichtung zur Seite hin gefördert. Hierzu ist eine entsprechende Ventilatoranordnung 17 vorgesehen, mittels der die Fördergeschwindigkeit der Luftströmung steuer- oder regelbar ist. Seitlich neben dem durch das Stahlband 10 definierten Trocknungsbereich innerhalb der Trocknungskammer, d.h. innerhalb des Gehäuses des Bandlufttrockners, ist ein weiterer Abschnitt vorgesehen, in dem eine Wärmetauscheranordnung 21 positioniert ist. Die Wärmeübertrageranordnung 21 ist in einem Strömungskanal 18, 19 angeordnet, der innerhalb der Trocknungskammer von der Ventilatoranordnung 17 aus zur Seite, im Bereich der Wärmeübertragung 21 nach unten und in U-förmiger Umlenkung unterhalb des Stahlbandes 10 wieder nach oben führt. Der Strömungskanal wird innenseitig durch die Führungswandungen 18, 19 gebildet. Außenseitig können die Gehäusewandungen selbst entsprechende Kanalwände bilden. Alternativ ist der Strömungskanal auch außenseitig durch separate Wandungen geformt, die an den Innenseiten der Wandungen des Gehäuses festgelegt sind. Der Strömungskanal wie auch die Strömungsleitmittel 20, die lediglich beispielhaft dargestellt sind, sind derart gestaltet, daß die gleichmäßige Verteilung der Luftströmung - wie zuvor beschrieben - erzielt wird.

Jedem Bandlufttrockner 9, 9a, 12, 12a ist eine elektronische Steuereinheit zugeordnet, die eine Steuerung der Strömungsgeschwindigkeit der temperierten Luftströmung, eine Steuerung der Bandlaufgeschwindigkeit, eine Steuerung der Förderleistung der Ventilatoranordnung 17 sowie gegebenenfalls eine Steuerung der Wärmeübertragungsleistung der Wärmeübertrageranordnung 21 ermöglicht. Falls die elektronischen Steuereinheiten an eine zentrale Systemsteuerung oder -regelung angeschlossen sind, so kann die Gesamtanlage im Hinblick auf die gewünschten Restfeuchtewerte, die gewünschte Durchsätzleistung der zu trocknenden Früchte und im Hinblick auf ähnliche Parameter kontrolliert werden, so daß eine vollständige Automation der Gesamtanlage erzielbar ist.

Nach der Aufpuffung der vorgetrockneten Früchte in der Mikrowellenstation 3 werden die aufgepufften Früchte über eine Fördereinrichtung 16, die als umlaufendes Förderband dargestellt ist, der Nachbehandlungsstation zugeführt.

Im Bereich der Nachbehandlungsstation 4 wird eine Nachtrocknung von dem nach der Mikrowellenaufpuffung verbleibenden Restfeuchtegehalt auf eine zur Lagerung geeignete Restfeuchte erzielt. Dadurch ist eine Strukturstabilisierung des aufgepufften Zustandes der Früchte beabsichtigt. Die Nachbehandlung der Früchte erfolgt nicht im Vakuum, sondern kann durch eine einfache Bandlufttrocknung oder auch durch andere, grundsätzlich bekannte Endtrocknungseinrichtungen erfolgen. Eine entsprechende Bandtrocknung ist durch das umlaufende Band 22 schematisch angedeutet.

Die Bandlufttrockner können anstelle von Stahlbändern auch Bänder aus anderen Materialien aufweisen.

## Patentansprüche

1. Verfahren zur Trocknung von Obst- oder Gemüsefrüchten, wobei die Früchte zunächst in wenigstens einem Bandlufttrockner vorgetrocknet, anschließend in einer Mikrowellenkammer aufgepufft und schließlich nachgetrocknet werden, **dadurch gekennzeichnet, daß** die Früchte in mindestens einer Trocknungsstufe bis auf eine für die Weiterbehandlung in der Mikrowellenkammer geeignete Restfeuchte vorgetrocknet werden, wobei sie in dieser bzw. wenigstens einer ersten Trocknungsstufe derart von unten her mit temperierter Luftströmung beaufschlagt werden, daß sie gleichmäßig im schwebenden oder nahezu schwebenden Zustand gehalten werden.

2. Verfahren nach Anspruch 1, dadurch gekennzeichnet, daß die Früchte vor dieser bzw. der ersten Trocknungsstufe in einer durchgehend gleichmäßig hohen, unverdichteten ein- oder mehrlagigen Schicht auf ein perforiertes Band verteilt werden.

3. Verfahren nach Anspruch 1 oder 2, dadurch gekennzeichnet, daß die Trocknung der Früchte in wenigstens zwei Trocknungsstufen erfolgt, wobei die Früchte zwischen den Trocknungsstufen gewendet werden.

4. Verfahren nach einem der vorhergehenen Ansprüche, dadurch gekennzeichnet, daß die Früchte auf eine Restfeuchte zwischen 25% und 35% vorgetrocknet werden.

5. Verfahren nach einem der vorhergehenden Ansprüche, dadurch gekennzeichnet, daß die Früchte für die Nachtrocknung aus der evakuierten Mikrowellenkammer (15) entnommen und auf eine für eine Lagerung erforderliche Restfeuchte nachbehandelt werden.

6. Verfahren nach einem der vorhergehenden Ansprüche, dadurch gekennzeichnet, daß die Früchte vor dem Aufgeben auf das perforierte Band mit einem Trennmittelüberzug versehen werden.

7. Verfahren nach einem der vorhergehenden Ansprüche, dadurch gekennzeichnet, daß auf das perforierte Band vor der ersten Trocknungsstufe ein Trennmittel aufgebracht wird.

8. Anlage zur Durchführung eines Verfahrens nach einem der vorhergehenden Ansprüche, dadurch gekennzeichnet, daß für jede von einer oder mehreren Trocknungsstufen der Früchtevortrocknung jeweils ein Bandlufttrockner (9, 12; 9a, 12a) mit einem umlaufenden, perforierten, zumindest in der ersten Trocknungsstufe von unten angeströmten Band (10, 10a; 13, 13a) vorgesehen ist, und daß zur Aufpuffung eine evakuierte Mikrowellenkammer (15) vorgesehen ist, an die sich eine Nachtrocknungsvorrichtung (4) anschließt.

9. , Anlage nach Anspruch 8, dadurch gekennzeichnet. daß die Bandlufttrockner (9, 12; 9a, 12a), die Mikrowellenkammer (15) und die Nachtrocknungsvorrichtung (4) durch Fördermittel (11, 14, 16) und elektronische Steuer- und/oder Regeleinheiten zu einer kontinuierlich arbeitenden, automatisierten Gesamteinheit miteinander gekoppelt sind.

10. Anlage nach Anspruch 8 oder 9, dadurch gekennzeichnet, daß in jedem Bandlufttrockner (9, 12; 9a, 12a) wenigstens eine Trocknungskammer vorgesehen ist, in der die Luftströmung quer zur Bandlaufrichtung im Kreislauf mittels einer Ventilatoranordnung (17) und Strömungsleitmitteln (18, 19, 20) derart geführt ist, daß das perforierte Band (10) rechtwinklig von unten her über die gesamte Breite der Früchteschicht mit gleichmäßiger Strömungsgeschwindigkeit anströmbar ist.

11. Anlage nach Anspruch 10, dadurch gekennzeichnet, daß eine Wärmetauscheranordnung (21) zur Temperierung der Luftströmung in der Trocknungskammer integriert ist.

12. Anlage nach einem der Ansprüche 8 bis 11, dadurch gekennzeichnet, daß zwischen benachbarten Bandlufttrocknern (9, 12) wenigstens ein Zwischenförderband (11) derart relativ zu dem perforierten Band (10) des in Förderrichtung vorderen Bandlufttrockners (9) angeordnet ist, daß die Früchteschicht von dem Zwischenförderband (11) in gewendetem Zustand weitergefördert wird.

13. Anlage nach einem der Ansprüche 8 bis 11, dadurch gekennzeichnet, daß benachbarte Bandtrockner (9a, 12a) einander derart zugeordnet sind, daß ein Bandauslauf des vorderen Bandlufttrockners (9a) oberhalb eines Bandeinlaufes des nachfolgenden Bandlufttrockners positioniert ist.

14. Anlage nach einem der Ansprüche 8 bis 13, dadurch gekennzeichnet, daß Mittel zur unverdichteten Verteilung der Früchte im Aufgabebereich auf das perforierte Band der ersten Trocknungskammer auf eine über die Bandbreite gleichmäßige Schichtdicke vorgesehen sind.

15. Anlage nach Anspruch 14, dadurch gekennzeichnet, daß die Mittel durch wenigstens einen, mittels einer Antriebsvorrichtung beweglich angeordneten Rechen gebildet sind.

16. Bandlufttrockner zur Vortrocknung einer Früchteschicht innerhalb eines Verfahrens nach einem der Ansprüche 1 bis 6, dadurch gekennzeichnet, daß eine Trocknungskammer vorgesehen ist, die von einem umlaufenden, perforierten Bandtrum eines Bandes (10) in Förderrichtung durchsetzt ist, und die die kennzeichnenden Merkmale des Anspruches 10 aufweist.
